(19) **Europäisches Patentamt**
**European Patent Office**
**Office européen des brevets**

(11) **EP 4 606 826 A1**

(12) **EUROPEAN PATENT APPLICATION**

(43) Date of publication:
27.08.2025 Bulletin 2025/35

(21) Application number: 24159119.7

(22) Date of filing: 22.02.2024

(51) International Patent Classification (IPC):
$C08F\ 210/06^{(2006.01)}$ $C08L\ 23/12^{(2006.01)}$

(52) Cooperative Patent Classification (CPC):
(C-Sets available)
C08F 210/06; C08L 23/12 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
- **TRANNINGER, Cornelia Anita**
  **4021 Linz (AT)**
- **LUMMERSTORFER, Thomas**
  **4021 Linz (AT)**
- **GAHLEITNER, Markus**
  **4021 Linz (AT)**

(74) Representative: **Maiwald GmbH**
**Elisenhof**
**Elisenstraße 3**
**80335 München (DE)**

(54) **HETEROPHASIC POLYPROPYLENE COMPOSITIONS WITH HIGH C2 CONTENT**

(57) The invention relates to a heterophasic polypropylene composition having a high ethylene content of the soluble fraction and narrow ratio of the intrinsic viscosities of the soluble fraction and the crystalline fraction, and an article comprising said heterophasic polypropylene composition.

EP 4 606 826 A1

**(Cont. next page)**

(52) Cooperative Patent Classification (CPC): (Cont.)

C-Sets
**C08F 210/06, C08F 2/001;**
**C08F 210/06, C08F 4/6465;**
**C08F 210/06, C08F 4/6492;**
**C08F 210/06, C08F 4/651;**
**C08F 210/06, C08F 4/6546;**
**C08L 23/12, C08L 23/12, C08L 23/16, C08L 23/16;**
C08F 110/06, C08F 2500/12, C08F 2500/35;
C08F 210/06, C08F 210/16, C08F 2500/12,
C08F 2500/35, C08F 2500/27, C08F 2500/17,
C08F 2500/34, C08F 2500/37, C08F 2500/30,
C08F 2500/31, C08F 2500/33, C08F 2500/39

**Description**

**Field of the invention**

The invention relates to a heterophasic polypropylene composition having a high ethylene content of the soluble fraction and narrow ratio of the intrinsic viscosities of the soluble fraction and the crystalline fraction, and an article comprising said heterophasic polypropylene composition.

**Technical background**

Materials combining good dimensional stability (low coefficient of thermal expansion, shrinkage) with a balanced mechanical performance are a constant need for the automotive business.

From literature it is known that a good dimensional stability of heterophasic materials require a polymer with fine morphology. This is often achieved by designing the heterophasic material in a way that it has a rubber phase of good compatibility, e.g., by having a rather propylene(C3)-rich rubber phase, and suitable flowability by adjusting the viscosity of the rubber phase to that of the matrix. However, heterophasic polypropylene compositions with such a rubber phase, i.e., C3-rich and rather low viscosity, tend to suffer from weak impact performance, especially at low temperatures. Due to their low C2-content the glass transition temperature of such materials is relatively high ($T_g$ > -40 °C), resulting in brittle failure behaviour at low temperatures.

It is known that the properties of heterophasic polypropylene compositions are often directly or indirectly interrelated, i.e. improving a specific property can only be accomplished on the expense of another property.

For example, the Coefficient of linear thermal expansion (CLTE) and the impact performance can be further tuned by compounding the heterophasic polypropylenes. Talcum, for example, improves the CLTE, but such additives increase the density of the material, which is detrimental for lightweight applications. Additionally, the impact performance is often negatively affected by the insertion of mineral fillers.

Consequently, developing a material having a good balance of properties such as low CLTE, acceptable flow properties, good impact performance, good elongation at break at reasonable stiffness is not trivial.

It was now surprisingly found that by designing a heterophasic polypropylene composition with a very ethylene-rich soluble fraction and a specifically adjusted intrinsic viscosity ratio between the soluble and the crystalline fraction leads, inter alia, to very good CLTE values combined with good notched Charpy impact strength at room as well as at low temperatures and good elongation at break, showing a good balance of desirable properties.

**Summary of the invention**

In a first aspect, the invention refers to a heterophasic polypropylene composition, characterized in that the composition has

- a total content of units derived from ethylene (C2) in the range of 25.0 to 45.0 wt.-%, as determined by FT-IR spectroscopy calibrated by quantitative $^{13}$C-NMR spectroscopy;
- a soluble fraction (SF) and a crystalline fraction (CF) according to crystallisation extraction analysis (CRYSTEX);
- a soluble fraction (SF) content determined by crystallisation extraction analysis (CRYSTEX) in the range of from 22.0 wt.-% to 42.0 wt.-%;
- an ethylene content of said soluble fraction C2(SF), as determined by FT-IR spectroscopy calibrated by quantitative $^{13}$C-NMR spectroscopy, in the range of from 50.0 to 75.0 wt.-%;
- an intrinsic viscosity of said soluble fraction iV(SF), determined by crystallisation extraction analysis (CRYSTEX), in the range of from 1.8 to 3.5 dl/g; and
- a ratio (iV(SF)/ iV(CF)) of the intrinsic viscosity of said soluble fraction iV(SF) to the intrinsic viscosity of the crystalline fraction iV(CF) in the range of from 1.00 to 1.70, wherein the intrinsic viscosities are determined by crystallisation extraction analysis (CRYSTEX).

In another aspect, the invention relates to an article, comprising the heterophasic polypropylene composition as described above or below.

**Detailed description of the invention**

Heterophasic polypropylene composition

In this disclosure, a heterophasic polypropylene composition is a polyolefin composition, in which at least 50.0 wt.-% of the total units of the polymeric components are derived from propylene and that due to its heterophasic nature possesses a matrix phase and a dispersed phase.

The heterophasic polypropylene composition of the invention has a total content of units derived from ethylene (C2) in the range of 25.0 to 45.0 wt.-%, preferably of 28.0 to 42.0 wt.-%, more preferably 30.0 to 40.0 wt.-% as determined by FT-IR spectroscopy calibrated by quantitative $^{13}$C-NMR spectroscopy, based on the total weight of the polymeric components.

In the heterophasic polypropylene composition of the invention, the remaining units of the polymeric components besides the units derived from ethylene (C2) are units derived from propylene (C3).

The term heterophasic describes the presence of a matrix phase, which is mainly composed of crystalline polymers and a dispersed phase, which is mainly composed of amorphous polymers such as elastomeric ethylene-propylene copolymers (EPC).

In order to characterize the matrix phase and the dispersed phase of a heterophasic polypropylene composition several methods are known. One method is the crystallization extraction (CRYSTEX).

This method is described below in the determination methods section. Thereby, the polymeric part of the polypropylene composition is characterized using trichlorobenzene (TCB) as a solvent. The obtained crystalline fraction (CF) consists essentially of the majority of the matrix phase and, if present, the crystalline part of the dispersed phase, while the obtained soluble fraction (SF) consists essentially of the majority of the dispersed phase and, if present, the amorphous part of the matrix phase. Due to the differences in the separation methods of xylene extraction and crystallization extraction (CRYSTEX) the properties of XCS/XCI fractions on the one hand and crystalline/soluble (CF/SF) fractions on the other hand are not exactly the same, meaning that the amounts can differ as well as the properties.

Generally, the crystalline fraction (CF) content and the soluble fraction (SF) content of a composition only relate to its polymeric components, i.e. without other components, which are insoluble and therefore not part of the dissolution and crystallization cycles as described below in the determination method.

The crystalline and amorphous polymeric parts of the heterophasic polypropylene composition of the invention are characterized by the crystallization extraction (CRYSTEX) method.

Accordingly, the heterophasic polypropylene composition has a soluble fraction (SF) content determined by crystallisation extraction analysis (CRYSTEX) in the range of from 22.0 wt.-% to 42.0 wt.-%, preferably from 25.0 to 39.0 wt.-%, more preferably from 27.0 to 37.0 wt.-%.

The ethylene content of said soluble fraction C2(SF), as determined by FT-IR spectroscopy calibrated by quantitative $^{13}$C-NMR spectroscopy, is in the range of from 50.0 to 75.0 wt.-%, preferably from 53.0 to 70.0 wt.-%, more preferably from 55.0 to 65.0 wt.-%.

Further, the intrinsic viscosity of said soluble fraction iV(SF), determined by crystallisation extraction analysis (CRYSTEX), is in the range of from 1.8 to 3.5 dl/g, preferably from 1.9 to 3.2 dl/g, more preferably from 1.9 to 3.0 dl/g.

The ratio of the intrinsic viscosity of the soluble fraction iV(SF) to the intrinsic viscosity of the crystalline fraction iV(CF) influences the mechanical properties. For this invention it was found that when the intrinsic viscosity ratio is rather low and close to unity, a very good balance of mechanical properties can be achieved.

Accordingly, the ratio (iV(SF)/ iV(CF)) of the intrinsic viscosity of said soluble fraction iV(SF) to the intrinsic viscosity of the crystalline fraction iV(CF) is in the range of from 1.00 to 1.70, preferably from 1.05 to 1.65, wherein the intrinsic viscosities are determined by crystallisation extraction analysis (CRYSTEX).

Since the inventive polypropylene composition is heterophasic, the crystalline fraction (CF) can also be determined by crystallization extraction (CRYSTEX). Preferably, the crystalline fraction (CF) content determined by crystallisation extraction analysis (CRYSTEX) is in the range of from 58.0 wt.-% to 78.0 wt.-%, more preferably from 61.0 to 75.0 wt.-%, yet more preferably from 63.0 to 73.0 wt.- %.

Due to the nature of the crystallisation extraction analysis (CRYSTEX), the combined amount of soluble fraction (SF) content and crystalline fraction (CF) content adds up to 100 wt.-% of the polymeric components.

The ethylene content of said crystalline fraction C2(CF), as determined by FT-IR spectroscopy calibrated by quantitative $^{13}$C-NMR spectroscopy, is preferably in the range of from 15.0 to 28.0 wt.-%, more preferably from 16.0 to 26.0 wt.-%, yet more preferably from 17.0 to 24.0 wt.-%.

The intrinsic viscosity ratio of the soluble and the crystalline fraction is an important characteristic of the inventive heterophasic polypropylene composition.

To achieve the necessary intrinsic viscosity ratio, it is therefore preferred that the intrinsic viscosity of said crystalline fraction iV(CF), determined by crystallisation extraction analysis (CRYSTEX), is in the range of from 0.8 to 2.5 dl/g, more preferably from 0.9 to 2.2 dl/g, yet more preferably from 1.0 to 2.0 dl/g.

It is preferred that the composition has a melt flow rate $MFR_2$ (230°C, 2.16 kg, ISO 1133) in the range of from 5 to 25 g/10 min, more preferably from 6 to 20 g/10 min, yet more preferably from 7 to 18 g/10 min.

The crystalline portion of the polymer components can be further characterised by analysing the crystalline fraction (CF) by differential scanning calorimetry (DSC). This method can provide the melting point of the crystalline portion of the polymer components. Crystalline fractions (CF) having two distinct melting points $T_{m,1}$ and $T_{m,2}$ indicate that there are two different crystalline polymeric components present. According to the present invention, it is preferred that the crystalline fraction (CF) has two melting points $T_{m,1}$ and $T_{m,2}$, determined by differential scanning calorimetry (DSC) according to ISO 11357 / part 3 / method C2, wherein the $T_{m,1}$ is in the range of from 115 to 125 °C, preferably of from 118 to 122 °C, and the $T_{m,2}$ is in the range of from 160 to 170 °C, preferably of from 162 to 168 °C, more preferably of from 163 to 167 °C.

It is also preferred that the crystalline fraction (CF) has two melting enthalpies $H_{m,1}$ and $H_{m,2}$, determined by differential scanning calorimetry (DSC) according to ISO 11357 / part 3 / method C2, wherein the $H_{m,1}$ is in the range of from 15 to 25 J/g, preferably 18 to 22 J/g, and the $H_{m,2}$ is in the range of from 65 to 95 J/g, preferably 70 to 90 J/g, more preferably of from 75 to 85 J/g.

The ratio $\dfrac{H_{m,2}}{H_{m,1}}$ of the two melting enthalpies $H_{m,1}$ and $H_{m,2}$ of the crystalline fraction (CF) is preferably in the range of 2.30 to 3.00, more preferably in the range of 2.40 to 2.90.

Another way of characterizing heterophasic polypropylene compositions is to determine the xylene cold soluble (XCS) fraction of the composition, which mostly corresponds to the amorphous part of the dispersed phase of the composition.

It is therefore preferred that the composition has a xylene cold soluble (XCS) fraction, determined according to ISO16152 (first edition; 2005-07-01), in the range of 20 to 40 wt.-%, preferably in the range of 23 to 37 wt.-%, more preferably in the range of 25 to 35 wt.-%.

In the following, mechanical properties and relationships of mechanical and intrinsic properties are described that can also be used to characterize the inventive heterophasic polypropylene composition.

It is preferred that the heterophasic polypropylene composition is characterized in that the composition has a tensile strain at break, measured according to ISO 527-2 (cross head speed = 1 mm/min; test speed 50 5 mm/min at 23 °C) using injection molded specimens 1B prepared as described in EN ISO 1873-2 (dog bone shape, 4 mm thickness), of more than 250 %, preferably in the range of 280 to 600 %, more preferably in the range of 300 to 550 %.

In a preferred embodiment, the ratio of the numerical values of the tensile strain at break to the Tensile modulus of the heterophasic polypropylene composition are in the following relationship to the soluble fraction content (SF) and the ethylene content of the crystalline fraction C2(CF):

$$C2(CF) * SF * 8 > \frac{Tensile\ strain\ at\ break}{100 * Tensile\ modulus} > C2(CF) * SF * 2$$

wherein

- C2(CF) is the ethylene content of the crystalline fraction in wt.-%;
- SF is the soluble fraction content determined by crystallisation extraction analysis (CRYSTEX) in wt.-%;
- Tensile strain at break in % was measured according to ISO 527-2 (cross head speed = 1 mm/min; test speed 50 5 mm/min at 23 °C) using injection molded specimens 1B prepared as described in EN ISO 1873-2 (dog bone shape, 4 mm thickness); and
- Tensile modulus in MPa was determined according to ISO 527-2 (cross head speed = 1 mm/min; test speed 50 mm/min at 23 °C) using injection molded specimens 1B prepared as described in EN ISO 1873-2 (dog bone shape, 4 mm thickness).

Preferably, the heterophasic polypropylene composition is characterized in that the numerical values of the tensile strain at break in %, measured according to ISO 527-2 (cross head speed = 1 mm/min; test speed 50 5 mm/min at 23 °C) using injection molded specimens 1B prepared as described in EN ISO 1873-2 (dog bone shape, 4 mm thickness), and the ethylene content of the soluble fraction C2(SF) in wt.-% fulfil the following relationship:

$$Tensile\ strain\ at\ break > -28.5 * C2(SF) + 1850\ .$$

Polymeric components of the heterophasic polypropylene composition

In the following, the inventive heterophasic polypropylene composition is described in preferred embodiments of the polymeric components present in the composition to arrive at a heterophasic polypropylene composition having the parameters and characteristics as described above.

In a preferred embodiment, the heterophasic polypropylene composition comprises

i) a crystalline polypropylene homopolymer (H-PP),
ii) an elastomeric ethylene-propylene copolymer (EPC), and
iii) a crystalline polyethylene (PE)

in a combined amount of more than 90.0 wt.-%, preferably in the range of 95.0 to 99.9 wt.-%, based on the total weight of the heterophasic polypropylene composition;
wherein the elastomeric ethylene-propylene copolymer (EPC) is present in the soluble fraction (SF) determined by crystallisation extraction analysis (CRYSTEX); and
wherein the crystalline polyethylene (PE) and crystalline polypropylene homopolymer (H-PP) are present in the crystalline fraction (CF) determined by crystallisation extraction analysis (CRYSTEX).

In this embodiment, the melting points and melting enthalpies of the crystalline fraction (CF), determined by DSC analysis as described above relate to the crystalline polyethylene and the crystalline polypropylene homopolymer. Accordingly, the first melting point $T_{m,1}$ and the first melting enthalpy $H_{m,1}$ relate to the crystalline polyethylene (PE) and the second melting point $T_{m,2}$ and the second melting enthalpy $H_{m,2}$ relate to the crystalline polypropylene homopolymer (H-PP). In this embodiment, the polyethylene in the crystalline fraction (CF) is the reason for the high ethylene content in the crystalline fraction C2(CF).

It is further preferred that the crystalline polypropylene homopolymer (H-PP) has a melt flow rate $MFR_2$ (230°C, 2.16 kg, ISO 1133) of 10 to 80 g/10 min, more preferably in the range of 15 to 60 g/10 min.

Preferably, the heterophasic polypropylene composition comprises the crystalline polypropylene homopolymer (H-PP) in an amount in the range of 35 to 68 wt.-%, more preferably 42 to 62 wt.-%, yet more preferably 47 to 58 wt.-%, based on the total weight of the composition.

The heterophasic polypropylene composition preferably comprises the elastomeric ethylene-propylene copolymer (EPC) in an amount in the range of 22 to 42 wt.-%, preferably from 25 to 39 wt.-%, more preferably from 27 to 37 wt.-%, based on the total weight of the composition.

In this embodiment, the amount of the elastomeric ethylene-propylene copolymer (EPC) in the heterophasic polypropylene composition corresponds to the soluble fraction (SF) content, as determined by crystallization extraction analysis (CRYSTEX).

Besides the crystalline polypropylene homopolymer (H-PP) and the elastomeric ethylene-propylene copolymer (EPC), the heterophasic polypropylene composition in this embodiment further comprises crystalline polyethylene (PE).

Preferably, the heterophasic polypropylene composition comprises the crystalline polyethylene (PE) in an amount in the range of 5 to 20 wt.-%, more preferably from 8 to 16 wt.-%, yet more preferably from 10 to 13 wt.-%, based on the total weight of the composition, when determined by differential scanning calorimetry (DSC) according to ISO 11357 / part 3 / method C2 and crystallisation extraction analysis (CRYSTEX).

While the heterophasic polypropylene composition of the invention could be obtained by blending the respective polymeric components to arrive at the composition having the described characteristics, it is preferred that the inventive heterophasic polypropylene composition is reactor-made.

Accordingly, the polymeric components of the heterophasic polypropylene composition can be polymerized successively and in the presence of each other. The amount of crystalline polyethylene (PE) in the heterophasic polypropylene composition of the invention is therefore determined from the first melting enthalpy $H_{m,1}$ of the heterophasic polypropylene composition, corresponding to the $H_m$ of the crystalline polyethylene (PE), the melting enthalpy $H_{m,PE}$ of pure (100%) crystalline polyethylene, the second melting enthalpy $H_{m,2}$ of the heterophasic polypropylene composition, corresponding to the $H_m$ of the crystalline polypropylene homopolymer (H-PP), the melting enthalpy $H_{m,PP}$ of pure (100%) crystalline polypropylene and the crystalline fraction content CF of the heterophasic polypropylene composition. Accordingly, the calculated amount of the crystalline polyethylene (PE) in the heterophasic polypropylene composition can be obtained by the following equation:

$$cryst.\,PE \triangleq \frac{\left(\dfrac{H_{m,1}}{H_{m,PE}}\right)}{\left(\dfrac{H_{m,1}}{H_{m,PE}}\right) + \left(\dfrac{H_{m,2}}{H_{m,PP}}\right)} * CF$$

wherein the $H_{m,1}$ and the $H_{m,2}$ are determined by DSC analysis, the CF is determined by crystallisation extraction analysis (CRYSTEX) and the $H_{m,PE}$ and the $H_{m,PP}$ have the known values of 293 J/g ($H_{m,PE}$) and 165 J/g ($H_{m,PP}$).

In a preferred embodiment, the heterophasic polypropylene composition consists of the polypropylene homopolymer (H-PP), the ethylene-propylene copolymer (EPC), the polyethylene (PE) and optionally additives.

Additives are commonly used in the composition according to the present invention for stabilization and homogenisation. Preferably, the additives are selected from one or more of antioxidant(s), UV stabilizer(s), slip agent(s), nucleating agent(s), pigment(s), lubricant(s), masterbatch polymer(s) and/or anti-fogging agents and combinations thereof. These additives are well known in the polymer industry and their use will be familiar to the skilled practitioner. Such additives are generally commercially available and are described, for example, in "Plastic Additives Handbook", pages 871 to 873, 5th edition, 2001 of Hans Zweifel.

Any additives, which are present, may be added as an isolated raw material or in a mixture with a carrier polymer, i.e. in a so-called master batch.

Additives are usually present in the composition in an amount of from 0.1 to 5.0 wt.-%, more preferably in an amount of from 0.5 to 3.5 wt.-%, based on the total weight of the composition.

Accordingly, it is preferred that the heterophasic polypropylene composition consists of polypropylene homopolymer (H-PP) in an amount of 47 to 58 wt.-%, the elastomeric ethylene-propylene copolymer (EPC) in an amount of 27 to 37 wt.-%, the crystalline polyethylene (PE) in an amount of 8 to 16 wt.-%, and additives in an amount of from 0.1 to 5.0 wt.-%,, wherein all weight-percentages are based on the total weight of the composition.

As already described above, the heterophasic polypropylene composition is preferably reactor-made.

Accordingly, it is preferred that the polymeric components of the heterophasic polypropylene composition are obtainable, preferably obtained by polymerizing the polypropylene homopolymer (H-PP), the ethylene-propylene copolymer (EPC) and the polyethylene (PE) in the presence of a Ziegler-Natta catalyst system in a multistage process comprising at least two polymerization reactors connected in series.

In the multistage process, the propylene homopolymer (H-PP) is preferably produced in at least one first polymerization step and in at least one subsequent polymerization step the ethylene-propylene copolymer (EPC) and the polyethylene (PE) are produced in the presence of said propylene homopolymer (H-PP).

In a particular preferred embodiment, the propylene homopolymer (H-PP) is produced at least in a slurry phase reactor and subsequently the ethylene-propylene copolymer (EPC) and the polyethylene (PE) are produced at least in a gas phase reactor.

Accordingly, the heterophasic polypropylene can be typically produced in a cascade of at least 2 reactors, preferably at least 3 reactors, more preferably at least 4 reactors, where the first reactor is a liquid bulk reactor preferably of loop design and all subsequent reactors are gas phase reactors, preferably of fluidized bed design. The number of subsequent reactors is typically not more than 6, preferably not more than 5. Preferably, the heterophasic polypropylene is produced in a cascade of 4 reactors.

A preferred multistage process is a "loop-gas phase"-process, as developed by Borealis (known as BORSTAR® technology) and is described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell. Preferably, the components produced in the first two reactors are crystallizable propylene homopolymers (H-PP), while the components produced in subsequent third and fourth reactor are a predominantly amorphous ethylene-propylene copolymer (EPC) with higher amounts of ethylene comonomer and a crystallizable polyethylene (PE).

In a preferred embodiment, the heterophasic polypropylene is obtainable by the process comprising the steps of

a) Polymerizing propylene in the presence of the Ziegler-Natta catalyst system in a first polymerization reactor for producing a first propylene homopolymer fraction;

b) Transferring a polymerization mixture comprising the Ziegler-Natta catalyst system and the first propylene homopolymer fraction from the first polymerization reactor to a second polymerization reactor;

c) Polymerizing propylene in the presence of the Ziegler-Natta catalyst system in the second polymerization reactor for producing a second propylene homopolymer fraction;

d) Transferring a polymerization mixture comprising the Ziegler-Natta catalyst system and the first and second propylene homopolymer fractions from the second polymerization reactor to a third polymerization reactor;

e) Polymerizing propylene and ethylene in the presence of the Ziegler-Natta catalyst system in the third polymerization reactor for producing a first ethylene-propylene copolymer and first polyethylene fraction;

f) Transferring a polymerization mixture comprising the Ziegler-Natta catalyst system, the first and second propylene homopolymer fractions and the first ethylene-propylene copolymer and first polyethylene fraction from the third polymerization reactor to a fourth polymerization reactor;

g) Polymerizing propylene and ethylene in the presence of the Ziegler-Natta catalyst system in the fourth polymerization reactor for producing a second ethylene-propylene copolymer and second polyethylene fraction;

h) Withdrawing a polymerization mixture comprising the Ziegler-Natta catalyst system, the first and second propylene homopolymer fractions and the first and second ethylene-propylene copolymer and polyethylene fractions from the fourth polymerization reactor; and

i) Obtaining the heterophasic polypropylene comprising the first and second propylene homopolymer fractions and the first and second ethylene-propylene copolymer and polyethylene fractions;

**EP 4 606 826 A1**

The first polymerization reactor preferably is a slurry phase reactor, such as a loop reactor.

It is preferred that the operating temperature in the first polymerization reactor, preferably the loop reactor, is in the range from 62 to 85 °C, more preferably in the range from 65 to 82 °C, still more preferably in the range from 67 to 80 °C.

Typically, the pressure in the first polymerization reactor, preferably in the loop reactor, is in the range from 20 to 80 barg, preferably from 30 to 70 barg, like from 35 to 65 barg.

It is preferred that in the first polymerization reactor, preferably the loop reactor, a propylene homopolymer is produced. Thus, it is preferred that the first polypropylene fraction is a first propylene homopolymer fraction.

Preferably hydrogen is added in the first polymerization reactor in order to control the molecular weight, i.e. the melt flow rate $MFR_2$. Preferably, the hydrogen to propylene ratio (H2/C3 ratio) in the first polypropylene reactor, preferably the loop reactor, is in the range from 3.0 to 12.0 mol/kmol, more preferably from 3.3 to 11.0 mol/kmol.

It is preferred that the first propylene polymer fraction has a melt flow rate $MFR_2$ (230°C, 2.16 kg, ISO 1133) in the range of 10 to 100 g/10 min, preferably in the range of 13 to 90 g/10 min, more preferably in the range of 15 to 80 g/10 min. The second polymerization reactor preferably is a first gas phase reactor, such as a first fluidized bed gas phase reactor.

It is preferred that the operating temperature in the second polymerization reactor, preferably the first gas phase reactor, is in the range from 55 to 85 °C, more preferably in the range from 65 to 75 °C.

Typically, the pressure in the second polymerization reactor, preferably in the first gas phase reactor, is in the range from 5 to 50 barg, preferably from 15 to 40 barg.

It is preferred that in the second polymerization reactor, preferably the first gas phase reactor, a propylene homopolymer is produced. Thus, it is preferred that the second propylene polymer fraction is a second propylene homopolymer fraction.

Preferably hydrogen is added in the second polymerization reactor in order to control the molecular weight, i.e. the melt flow rate $MFR_2$. Preferably the hydrogen to propylene ratio (H2/C3 ratio) in the second polypropylene reactor, preferably the first gas phase reactor, is in the range from 40 to 130 mol/kmol, more preferably from 45 to 120 mol/kmol.

It is preferred that the combined first and second propylene polymer fractions have a melt flow rate $MFR_2$ (230°C, 2.16 kg, ISO 1133) in the range of 10 to 100 g/10 min, preferably in the range of 13 to 90 g/10 min, more preferably in the range of 15 to 80 g/10 min.

The third polymerization reactor preferably is a second gas phase reactor, such as a second fluidized bed gas phase reactor.

It is preferred that the operating temperature in the third polymerization reactor, preferably the second gas phase reactor, is in the range from 70 to 90 °C, more preferably in the range from 75 to 85 °C. Preferably, the operating temperature in third polymerization reactor is higher than the operating temperature in the second polymerization reactor.

Typically, the pressure in the third polymerization reactor, preferably in the second gas phase reactor, is in the range from 5 to 40 kPa, preferably from 10 to 30 kPa.

In the third polymerization reactor, preferably the second gas phase reactor, an ethylene propylene copolymer and a polyethylene is produced. Thus, the third propylene polymer fraction is a first ethylene propylene copolymer and a first polyethylene fraction.

The ethylene to propylene ratio (C2/C3 ratio) in the third polymerization reactor, preferably the second gas phase reactor, is in the range from 1500 to 2500 mol/kmol, more preferably from 1550 to 2400 mol/kmol. Due to the high ethylene to propylene ratio (C2/C3 ratio), the third propylene polymer fraction preferably is a mixture of an elastomeric ethylene propylene copolymer and a crystalline polyethylene.

Preferably hydrogen is added in the third polymerization reactor in order to control the molecular weight, i.e. the melt flow rate $MFR_2$.

Preferably, the hydrogen to ethylene ratio (H2/C2 ratio) in the third polymerization reactor, preferably the second gas phase reactor, is in the range from 80 to 250 mol/kmol, more preferably from 85 to 230 mol/kmol.

It is preferred that the combined first, second and third polypropylene fractions have a melt flow rate $MFR_2$ (230°C, 2.16 kg, ISO 1133) in the range of 8 to 60 g/10 min, preferably in the range of 9 to 50 g/10 min, more preferably in the range of 10 to 40 g/10 min.

The fourth polymerization reactor preferably is a third gas phase reactor, such as a third fluidized bed gas phase reactor.

It is preferred that the operating temperature in the fourth polymerization reactor, preferably the third gas phase reactor, is in the range from 70 to 90 °C, more preferably in the range from 75 to 85 °C. Preferably, the operating temperature in the fourth polymerization reactor is higher than the operating temperature in the second polymerization reactor.

Typically, the pressure in the fourth polymerization reactor, preferably in the third gas phase reactor, is in the range from 5 to 40 kPa, preferably from 10 to 30 kPa.

In the fourth polymerization reactor, preferably the third gas phase reactor, an ethylene propylene copolymer and a polyethylene is produced. Thus, the fourth propylene polymer fraction is a second ethylene propylene copolymer and a second polyethylene fraction.

The ethylene to propylene ratio (C2/C3 ratio) in the fourth polymerization reactor, preferably the third gas phase reactor, is in the range from 1500 to 2500 mol/kmol, more preferably from 1550 to 2400 mol/kmol. Due to the high ethylene to propylene ratio (C2/C3 ratio) the fourth propylene polymer fraction preferably is an elastomeric ethylene propylene copolymer and a crystalline polyethylene.

Preferably hydrogen is added in the fourth polymerization reactor in order to control the molecular weight, i.e. the melt flow rate $MFR_2$. Preferably, the hydrogen to ethylene ratio (H2/C2 ratio) in the fourth polymerization reactor, preferably the third gas phase reactor, is in the range from 80 to 250 mol/kmol, more preferably from 85 to 240 mol/kmol.

It is preferred that the combined first, second, third and fourth polymer fractions have a melt flow rate $MFR_2$ (230°C, 2.16 kg, ISO 1133) in the range of 5 to 25 g/10min, preferably of 6 to 22 g/10min, more preferably of 7 to 20 g/10min.

Further the combined first, second, third and fourth polymer fractions preferably have a total ethylene (C2) content in the range of 25.0 to 45.0 wt.-%, more preferably of 28.0 to 42.0 wt.-%, yet more preferably of 30.0 to 40.0 wt.-%, based on the total weight of the combined first, second, third and fourth polymer fractions, as determined by FT-IR spectroscopy calibrated by quantitative $^{13}$C-NMR spectroscopy.

The combined first, second, third and fourth propylene polymer fractions preferably form a heterophasic polypropylene.

The preparation of the first, second, third and fourth polymer fractions can comprise in addition to the (main) polymerization stages in the at least four polymerization reactors prior thereto a pre-polymerization in a pre-polymerization reactor upstream to the first polymerization reactor.

In the pre-polymerization reactor, a polypropylene is produced. The pre-polymerization is preferably conducted in the presence of the Ziegler-Natta catalyst system. According to this embodiment, the Ziegler-Natta catalyst system is introduced to the pre-polymerization step. However, this shall not exclude the option that at a later stage for instance further co-catalyst is added in the polymerization process, for instance in the first reactor. In one embodiment, all components of the Ziegler-Natta catalyst system are only added in the pre-polymerization reactor, if a pre-polymerization is applied.

The pre-polymerization reaction is typically conducted at a temperature of 0 to 60 °C, preferably from 10 to 40 °C, and more preferably from 12 to 30 °C.

The pressure in the pre-polymerization reactor is not critical but must be sufficiently high to maintain the reaction mixture in liquid phase. Thus, the pressure may be from 20 to 100 kPa, for example from 30 to 70 kPa.

In a preferred embodiment, the pre-polymerization is conducted as bulk slurry polymerization in liquid propylene, i.e. the liquid phase mainly comprises propylene, optionally with inert components dissolved therein.

It is possible to add other components also to the pre-polymerization stage. Thus, hydrogen may be added into the pre-polymerization stage to control the molecular weight of the polypropylene as is known in the art. Further, antistatic additives may be used to prevent the particles from adhering to each other or to the walls of the reactor.

The precise control of the pre-polymerization conditions and reaction parameters is within the skill of the art.

Due to the above defined process conditions in the pre-polymerization, preferably a mixture of the Ziegler-Natta catalyst system and the polypropylene produced in the pre-polymerization reactor is obtained. Preferably, the Ziegler-Natta catalyst system is (finely) dispersed in the polypropylene. In other words, the Ziegler-Natta catalyst system introduced in the pre-polymerization reactor are split into smaller fragments that are evenly distributed within the growing polypropylene. The sizes of the introduced Ziegler-Natta catalyst system as well as of the obtained fragments are not of essential relevance for the instant invention and within the skilled knowledge.

As mentioned above, if a pre-polymerization is used, subsequent to said pre-polymerization, the mixture of the Ziegler-Natta catalyst system and the polypropylene produced in the pre-polymerization reactor is transferred to the first polymerization reactor. Typically, the total amount of polypropylene produced in the pre-polymerization reactor is rather low and typically not more than 5.0 wt.-%, more preferably not more than 4.0 wt.-%, still more preferably in the range from 0.5 to 4.0 wt.-%, like in the range from 1.0 of to 3.0 wt.-%, based on the total combined weight of the first, second, third and fourth polymer fractions.

In case that pre-polymerization is not used, propylene and the other ingredients such as the Ziegler-Natta catalyst system can be directly introduced into the first polymerization reactor.

The residence times of the polymerization mixtures in the different polymerization stages are adjusted to obtain the amounts of the first, second, third and fourth polymer fractions in the combined first, second, third and fourth polymer fractions.

Preferably the first polymer fraction is present in an amount of from 20 to 40 wt.-%, more preferably from 25 to 35 wt.-%, based on the total weight of the combined first, second, third and fourth propylene polymer fractions. The amount of the polypropylene produced in the pre-polymerization reactor, if present, is generally added to the amount of the first propylene polymer fraction.

Preferably the second polymer fraction is present in an amount of from 15 to 30 wt.- %, more preferably from 18 to 27 wt.-%, based on the total weight of the combined first, second, third and fourth propylene polymer fractions.

Preferably the third polymer fraction is present in an amount of from 20 to 40 wt.-%, more preferably from 25 to 36 wt.-%, based on the total weight of the combined first, second, third and fourth propylene polymer fractions.

Preferably the fourth propylene polymer fraction is present in an amount of from 5 to 25 wt.-%, more preferably from 10 to 20 wt.-%, based on the total weight of the combined first, second, third and fourth polymer fractions.

According to the invention, the heterophasic polypropylene is preferably obtained by a multistage polymerization process, as described above, in the presence of a Ziegler-Natta catalyst system.

As pointed out above in the specific process for the preparation of the heterophasic polypropylene as defined above, a specific Ziegler-Natta catalyst is preferably used.

The preferred Ziegler-Natta catalyst system of this invention is described in more detail in WO 2016/066446 A1, or WO 2023/180272 A1, which are incorporated by reference. All preferred embodiments of the Ziegler-Natta catalyst system described in these disclosures are also preferred embodiments of the Ziegler-Natta catalyst system for the present invention.

Article

The heterophasic polypropylene composition of this invention exhibits a very good balance of mechanical properties and is therefore ideal for use in articles.

Accordingly, one aspect of the invention pertains to an article, preferably an automotive article comprising, preferably consisting of the heterophasic polypropylene composition. Preferred articles are functional elements of the automotive interior and interior trims like pillar trims, dashboard elements, central consoles and the like.

**Examples**

The following definitions of terms and determination methods apply for the above general description of the invention as well as to the below examples unless otherwise defined.

**1. Measurement methods**

a) Melt Flow Rate (MFR$_2$)

The melt flow rate MFR$_2$ of propylene based polymers is measured at 230°C with a load of 2.16 kg according to ISO 1133.

The melt flow rate MFR$_2$ of the ethylene based polymers is measured at 190°C with a load of 2.16 kg according to ISO 1133.

b) Density

The density is measured according to ISO 1183-1:2004 Method A on compression moulded specimen prepared according to EN IS0 1872-2 (Feb 2007) and is given in g/cm$^3$.

c) Comonomer content

Comonomer content quantification of poly(propylene-co-ethylene) copolymers

Quantitative $^{13}$C{$^1$H} NMR spectra were recorded in the solution-state using a Bruker Avance NEO 400 NMR spectrometer operating at 400.15 and 100.62 MHz for $^1$H and $^{13}$C respectively. All spectra were recorded using a $^{13}$C optimised 10 mm extended temperature probe head at 125°C using nitrogen gas for all pneumatics. Approximately 200 mg of material was dissolved in 3 ml of *1,2*-tetrachloroethane-$d_2$ (TCE-$d_2$) along with chromium-(III)-acetylacetonate (Cr(acac)$_3$) resulting in a 60 mM solution of relaxation agent in solvent {8} and with approximately 3 mg BHT (2,6-di-tert-butyl-4-methylphenol CAS 128-37-0). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bilevel WALTZ16 decoupling scheme {3, 4}. A total of 6144 (6k) transients were acquired per spectra.

Quantitative $^{13}$C{$^1$H} NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed {7}.

The comonomer fraction was quantified using the method of Wang et. al. {6} through integration of multiple signals across the whole spectral region in the $^{13}C\{^{1}H\}$ spectra. This method was chosen for its robust nature and ability to account for the presence of regiodefects when needed. Integral regions were slightly adjusted to increase applicability across the whole range of encountered comonomer contents.

For systems where only isolated ethylene in PPEPP sequences was observed the method of Wang et al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5 \ (S\beta\beta + S\beta\gamma + S\beta\delta + 0.5(S\alpha\beta + S\alpha\gamma))$$

Through the use of this set of sites the corresponding integral equation becomes:

$$E = 0.5 \ (I_H + I_G + 0.5(I_C + I_D))$$

using the same notation used in the article of Wang et al. {6}. Equations used for absolute propylene content were not modified.

The mole percent comonomer incorporation was calculated from the mole fraction:

$$E \ [mol\%] = 100 * fE$$

The weight percent comonomer incorporation was calculated from the mole fraction:

$$E \ [wt.\text{-}\%] = 100 * (fE * 28.06 \ ) / ( \ (fE * 28.06) + ((1\text{-}fE) * 42.08) \ )$$

Bibliographic references:

1) Busico, V., Cipullo, R., Prog. Polym. Sci. 26 (2001) 443.
2) Busico, V., Cipullo, R., Monaco, G., Vacatello, M., Segre, A.L., Macromolecules 30 (1997) 6251.
3) Zhou, Z., Kuemmerle, R., Qiu, X., Redwine, D., Cong, R., Taha, A., Baugh, D. Winniford, B., J. Mag. Reson. 187 (2007) 225.
4) Busico, V., Carbonniere, P., Cipullo, R., Pellecchia, R., Severn, J., Talarico, G., Macromol. Rapid Commun. 2007, 28, 1128.
5) Resconi, L., Cavallo, L., Fait, A., Piemontesi, F., Chem. Rev. 2000, 100, 1253.
6) Wang, W-J., Zhu, S., Macromolecules 33 (2000), 1157.
7) Cheng, H. N., Macromolecules 17 (1984), 1950.
8) Singh, G., Kothari, A., Gupta, V., Polymer Testing 28 5 (2009), 475.
9) Kakugo, M., Naito, Y., Mizunuma, K., Miyatake, T. Macromolecules 15 (1982) 1150.
10) Randall, J. Macromol. Sci., Rev. Macromol. Chem. Phys. 1989, C29, 201.
11) Resconi, L., Cavallo, L., Fait, A., Piemontesi, F., Chem. Rev. 2000, 100, 1253.

d) <u>Differential scanning analysis (DSC)</u>

Melting peak temperatures ($T_{p,m}$), melting enthalpies ($H_m$), crystallization peak temperature ($T_{p,c}$) and crystallization enthalpy ($H_c$) was measured with a TA Instrument Q200 differential scanning calorimetry (DSC) on 5 to 7 mg samples. DSC was run according to ISO 11357 / part 3 / method C2 in a heat / cool / heat cycle with a scan rate of 10 °C/min in the temperature range of -30 - 26 - to +225 °C. Crystallization peak temperature ($T_{p,c}$) and crystallization enthalpy ($H_c$) were determined from the cooling step, while the two melting peak temperatures ($T_{m1}$) and ($T_{m2}$) and two melting enthalpies ($H_{m1}$) and ($H_{m2}$) were determined from the second heating step.

e) <u>Crystallization extraction (CRYSTEX)</u>

Note: Crystallization extraction (CRYSTEX) analyses the polymeric part of each component, with non-polymeric parts, such as any fillers or particulate pigments, not contributing to the reported CRYSTEX data presented.

**Determination of crystalline and soluble fractions and their respective properties (iV and Ethylene content)**

The crystalline (CF) and soluble fractions (SF) of the polypropylene (PP) compositions as well as the comonomer content and intrinsic viscosities of the respective fractions were analyzed by use of the Crystex (crystallisation extraction) method. Potential instruments that can be used are Crystex QC or Crystex 42 (Polymer Char; Valencia, Spain). Details of the technique and the method can be found in literature (Ljiljana Jeremic, Andreas Albrecht, Martina Sandholzer & Markus Gahleitner (2020): Rapid characterization of high-impact ethylene-propylene copolymer composition by crystallization extraction separation: comparability to standard separation methods, International Journal of Polymer Analysis and Characterization, 25:8, 581-596).

The crystalline and amorphous fractions are separated through temperature cycles of dissolution at 160°C, crystallization at 40°C and re-dissolution in 1,2,4-trichlorobenzene at 160°C. Quantification of SF and CF and determination of ethylene content (C2) are achieved by means of an integrated infrared detector (IR4) and for the determination of the intrinsic viscosity (iV) an online 2-capillary viscometer is used.

IR4 detector is a multiple wavelength detector measuring IR absorbance at two different bands (CH3 stretching vibration (centred at app. 2960 cm$^{-1}$) and the CH stretching vibration (2700-3000 cm$^{-1}$) that are serving for the determination of the concentration and the Ethylene content in Ethylene-Propylene copolymers. IR4 detector is calibrated with series of 8 EP copolymers with known Ethylene content in the range of 2 wt.-% to 69 wt.-% (determined by $^{13}$C-NMR) and each at various concentrations, in the range of 2 and 13mg/ml. To encounter for both features, concentration and ethylene content at the same time for various polymer concentration expected during Crystex analyses the following calibration equations were applied:

$$\text{Conc} = a + b^*\text{Abs(CH)} + c^*(\text{Abs(CH)})^2 + d^*\text{Abs(CH}_3) + e^*(\text{Abs(CH}_3)^2 + f^*\text{Abs(CH)}^*\text{Abs(CH}_3) \qquad \text{(Equation 1)}$$

$$\text{CH}_3/1000\text{C} = a + b^*\text{Abs(CH)} + c^* \text{Abs(CH}_3) + d * (\text{Abs(CH}_3)/\text{Abs(CH)}) + e * (\text{Abs(CH}_3)/\text{Abs(CH)})^2 \qquad \text{(Equation 2)}$$

The constants a to f for equation 1 and a to e for equation 2 were determined by using least square regression analysis.

The CH$_3$/1000C is converted to the ethylene content in wt.-% using following relationship:

$$\text{wt.-\% (Ethylene in EP Copolymers)} = 100 - \text{CH}_3/1000\text{TC} * 0.3 \qquad \text{(Equation 3)}$$

Amount of Soluble Fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.-%. A linear calibration curve is used.

Intrinsic viscosity (iV) of the parent EP copolymer and its soluble and crystalline fractions are determined with a use of an online 2-capillary viscometer and are correlated to corresponding iV's determined by standard method in decalin according to ISO 1628-3. Calibration is achieved with various EP copolymers and PP polymers with iV = 2-4 dL/g. The determined calibration curve is linear.

The samples to be analyzed are weighed out in concentrations of 10 mg/ml to 20 mg/ml. After automated filling of the vial with 1,2,4-TCB containing 250 mg/l 2,6-tert-butyl-4-methylphenol (BHT) as antioxidant, the sample is dissolved at 170°C until complete dissolution is achieved with either constant stirring or gentle shaking. To avoid sample degradation, polymer solution is blanketed with the N$_2$ atmosphere during dissolution.

For PP composition containing inorganic fillers or pigments or any other non-TCB soluble polymeric substances removal of these is required. This can be done by hot filtration prior injection.

A defined volume of the polymer solution is injected into the column filled with inert support where the crystallization of the sample and separation of the soluble fraction from the crystalline fraction is taking place. This process is repeated two times. During the first injection the whole sample is measured at high temperature, determining the iV [dl/g] and the C2 [wt.-%] of the PP composition. During the second injection the soluble fraction (at low temperature) and the crystalline fraction (at high temperature) with the crystallization cycle are measured (wt.-% SF, wt.-% C2, iV).

f) Flexural Modulus

The flexural modulus was determined acc. to ISO 178 method A (3-point bending test) on $80 \times 10 \times 4$ mm$^3$ specimens. Following the standard, a test speed of 2 mm/min and a span length of 16 times the thickness was used. The testing temperature was $23 \pm 2°$ C. Injection moulding was carried out according to ISO 19069-2 using a melt temperature of 230°C for all materials irrespective of material melt flow rate.

g) Tensile Modulus

The tensile properties were determined on injection moulded dogbone specimens prepared in accordance with ISO 527-2 using a melt temperature of 230 °C. Tensile modulus was determined according to ISO 527-1,-2 at 1 mm/min and 23°C. To determine stress at yield and strain at yield, a speed of 50 mm/min. was used.

h) Charpy notched impact strength

The Charpy notched impact strength was determined acc. to ISO 179-1/1eA on notched $80 \times 10 \times 4$ mm$^3$ specimens (specimens were prepared according to ISO 179-1/1eA). Testing temperatures were $23 \pm 2°$ C or $-20 \pm 2°$ C. Injection moulding was carried out acc. to ISO 19069-2 using a melt temperature of 230°C for all materials irrespective of material melt flow rate.

i) Xylene cold solubles (XCS) content

The quantity of xylene soluble matter in polypropylene is determined according to the ISO16152 (first edition; 2005-07-01).

A weighed amount of a sample is dissolved in hot xylene under reflux conditions at 135°C. The solution is then cooled down under controlled conditions and maintained at 25°C for 30 minutes to ensure controlled crystallization of the insoluble fraction. This insoluble fraction is then separated by filtration. Xylene is evaporated from the filtrate leaving the soluble fraction as a residue. The percentage of this fraction is determined gravimetrically.

$$\% XS = \frac{m_1 \times v_0}{m_0 \times v_1} \times 100$$

where

$m_0$ is the mass of the sample test portion weighed, in grams
$m_1$ is the mass of residue, in grams
$v_0$ is the original volume of solvent taken
$v_1$ is the volume of the aliquot taken for determination.

j) Coefficient of linear thermal expansion (CLTE)

The coefficient of linear thermal expansion (CLTE) was determined in accordance with ISO 11359-2:1999 on 10 mm long pieces cut from the core of the same injection molded specimens as used for the flexural modulus determination. The measurement was performed in a temperature range from -30 to +80°C at a heating rate of 1 °C/min and in a temperature range from +23 to +80°C at a heating rate of 1 °C/min, respectively.

k) Instrumented Puncture Test (Puncture energy)

Instrumented puncture test was performed on $60 \times 60 \times 3$ mm$^3$ injection-molded plaques at 23°C and -20°C according to ISO 6603-2:2000. The measurement was done after 96 h conditioning time of the specimen at 23 °C, -20 °C and -30 °C.

l) Heat Deflection Temperature (HDT)

The HDT was determined on injection molded test specimens of $80 \times 10 \times 4$ mm$^3$ prepared according to ISO 1873-2 and stored at +23°C for at least 96 hours prior to measurement. The test was performed on flatwise supported specimens according to ISO 75, condition B, with a nominal surface stress of 0.45 MPa.

m) Dynamic Mechanical Thermal Analysis (DMTA) $T_g$ and Storage modulus G'

The glass transition temperature $T_g$ is determined by dynamic mechanical thermal analysis (DMTA) according to ISO 6721-7. The measurements are done in torsion mode on compression moulded samples (40x10x1 mm$^3$) between -100 °C and +150 °C with a heating rate of 2 °C/min and a frequency of 1 Hz.

Storage modulus G' is determined at +23°C according ISO 6721-7:1996. The measurements are done in torsion mode on compression moulded samples ($40 \times 10 \times 1$ mm$^3$) between -150 °C and +150 °C with a heating rate of 2 °C/min and a frequency of 1 Hz.

## Examples

## Preparation of the heterophasic polypropylene powders

Catalyst system:

For the polymerization process of heterophasic polypropylene powders, a Ziegler-Natta type catalyst (ZN1) as used and described for the inventive examples of WO 2016/066446 A1, pre-polymerized with vinylcyclohexane to achieve nucleation with poly(vinylcyclohexane) was used.

Nucleation by prepolymerization with vinylcyclohexane is described in EP 2 960 256 B1 and EP 2 960 279 B1 in detail. These documents are incorporated by reference.

Polymerization of heterophasic polypropylenes

The heterophasic polypropylenes were made in prepolymerization / loop reactor / gas phase reactor 1 / gas phase reactor 2 / gas phase reactor 3 configuration followed by a pelletization step. The catalyst systems defined above was used in combination with triethyl-aluminium (TEAL) as co-catalyst and dicyclopentadienyl-dimethoxy silane (donor D) as external donor.

Table 1: Polymerization conditions of heterophasic polypropylene powders IE1-IE3 and CE1 to CE4.

| | IE1 | IE2 | IE3 | CE1 | CE2 | CE3 | CE4 |
|---|---|---|---|---|---|---|---|
| **PREPOLY** | | | | | | | |
| Temp. (°C) | 20 | 20 | 20 | 20 | 20 | 20 | 20 |
| Press. (kPa) | 55 | 55 | 55 | 55 | 55 | 55 | 55 |
| external donor | D | D | D | D | D | D | D |
| Al/donor (mol/mol) | 40.8 | 41.1 | 40.7 | 40.4 | 40.6 | 40.5 | 40.5 |
| Do/Ti (mol/mol) | 7.5 | 12.2 | 12.1 | 9.9 | 5.2 | 6.5 | 6.5 |
| **LOOP** | | | | | | | |
| Temp. (°C) | 75 | 75 | 75 | 75 | 75 | 75 | 75 |
| Press. (Barg) | 55 | 55 | 55 | 55 | 55 | 55 | 55 |
| H2/C3 ratio (mol/kmol) | 4.35 | 8.68 | 8.68 | 10.69 | 10.65 | 4.20 | 10.64 |
| Split Loop (wt.-%) | 31.0 | 29.5 | 28.9 | 38.5 | 29.0 | 40.7 | 29.9 |
| MFR$_2$ [g/10 min] | 20.2 | 56.1 | 56.1 | 72.2 | 77.1 | 18.8 | 73.3 |
| XCS [wt.-%] | 1.70 | 1.80 | 1.60 | 1.90 | 1.80 | 1.70 | 1.80 |
| | | | | | | | |
| **GPR 1** | | | | | | | |
| Temp. (°C) | 70 | 70 | 70 | 70 | 70 | 70 | 70 |
| Press. (barg) | 21.99 | 21.98 | 21.99 | 21.99 | 22.00 | 21.98 | 22.01 |
| H2/C3 ratio (mol/kmol) | 73.04 | 106.30 | 107.25 | 125.99 | 127.77 | 61.12 | 117.69 |
| Split GPR1 (wt.-%) | 24.7 | 22.6 | 22.5 | 25.7 | 20.7 | 27.2 | 25.6 |

(continued)

| GPR 1 | | | | | | | |
|---|---|---|---|---|---|---|---|
| Matrix (Loop & GPR1) (wt,-%) | 55.7 | 52.1 | 51.4 | 64.2 | 49.7 | 67.9 | 55.5 |
| $MFR_2$ (g/10 min) | 23.6 | 51.9 | 51.90 | 71.1 | 68.50 | 18.60 | 65.10 |
| MFR in GPR1 (g/10min) | 28.8 | 47.0 | 47.00 | 69.8 | 57.80 | 18.40 | 56.30 |
| XCS [wt.-%] | 1.70 | 1.80 | 1.80 | 1.90 | 1.90 | 1.80 | 1.90 |
| | | | | | | | |
| GPR2 | | | | | | | |
| Temp. (°C) | 80 | 80 | 80 | 80 | 80 | 80 | 80 |
| Press. (kPa) | 20 | 20 | 20 | 20 | 20 | 20 | 20 |
| C2/C3 ratio (mol/kmol) | 1769 | 1892 | 1882 | 498 | 1803 | 509 | 1869 |
| H2/C3 ratio (mol/kmol) | 362 | 203 | 204 | 29 | 128 | 129 | 158 |
| H2/C2 ratio (mol/kmol) | 205 | 108 | 108 | 59 | 71 | 253 | 84 |
| Split GPR2 (wt.-%) | 29.7 | 32.1 | 32.6 | 24.0 | 33.7 | 21.5 | 29.8 |
| $MFR_2$ (g/10 min) | 12.5 | 14.4 | 15 | 12.3 | 9 | 13 | 18 |
| Total C2 (wt.-%) | 26.3 | 23.0 | 24.1 | 14.7 | 26.7 | 11.8 | 22.2 |
| XCS (wt.-%) | 26.6 | 23.0 | 24.0 | 30.8 | 25.8 | 25.6 | 23.0 |
| GPR3 | | | | | | | |
| Temp. (°C) | 80 | 80 | 80 | 80 | 80 | 80 | 80 |
| Press. (kPa) | 22.0 | 22.0 | 22.0 | 22.0 | 22.0 | 22.0 | 22.0 |
| H2/C2 ratio (mol/kmol) | 212 | 126 | 125 | 56 | 88 | 253 | 82 |
| C2/C3 ratio (mol/kmol) | 1759 | 1885 | 1919 | 498 | 1812 | 489 | 1888 |
| Split GPR3 (wt.-%) | 14.6 | 15.8 | 16.0 | 11.8 | 16.6 | 10.6 | 14.7 |
| Split GPR2&3 (wt.-%) | 44.3 | 47.9 | 48.6 | 35.8 | 50.3 | 32.1 | 44.5 |
| | | | | | | | |
| Final powder | | | | | | | |
| $MFR_2$ (g/10 min) | 10.2 | 8.8 | 9.7 | 8.4 | 5.1 | 12.0 | 7.6 |
| XCS (wt.-%) | 31.9 | 31.8 | 29.7 | 33.2 | 33.0 | 29.5 | 29.3 |

All heterophasic polypropylene powders were homogenised and stabilised after production by being compounded in a co-rotating twin screw extruder (ZSK57) with 0.15 wt.-% antioxidant (Irganox B215FF from BASF AG, Germany; this is a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4); 0.05 wt.-% Calcium stearate (CAS-no.1592-23-0, commercially available from Faci, Italy), 0.33 wt.-% Glycerol monostearate (> 90 wt.-%, Dimodan HP FF), 0.07 wt.-% Glycerol monolaurate (> 90 wt.-%, GML90) and 0.8 wt.-% talcum.

Table 2: Properties of the heterophasic polypropylene compositions.

| Property | Unit | IE1 | IE2 | IE3 | CE1 | CE2 | CE3 | CE4 |
|---|---|---|---|---|---|---|---|---|
| CRYSTEX | | | | | | | | |
| C2 content | wt.-% | 32.74 | 35.25 | 35.16 | 18.69 | 36.87 | 14.89 | 34.20 |
| soluble fraction (SF) content | wt.-% | 33.4 | 33.3 | 32.4 | 36.1 | 34.9 | 30.2 | 31.7 |
| crystalline fraction (CF) content | wt.-% | 66.6 | 66.7 | 67.6 | 63.9 | 65.1 | 69.8 | 68.3 |

(continued)

| Property | Unit | IE1 | IE2 | IE3 | CE1 | CE2 | CE3 | CE4 |
|---|---|---|---|---|---|---|---|---|
| **CRYSTEX** | | | | | | | | |
| C2 content crystalline fraction C2(CF) | wt.-% | 20.0 | 22.91 | 22.89 | 7.19 | 23.87 | 5.29 | 21.56 |
| C2 content soluble fraction C2(SF) | wt.-% | 58.12 | 60.07 | 60.77 | 39.08 | 61.21 | 37.06 | 61.43 |
| intrinsic viscosity (iV) | dL/g | 1.86 | 2.16 | 2.15 | 2.22 | 2.58 | 1.77 | 2.32 |
| intrinsic viscosity crystalline fraction iV(CF) | dL/g | 1.77 | 1.83 | 1.84 | 1.55 | 2 | 1.73 | 1.88 |
| intrinsic viscosity soluble fraction iV(SF) | dL/g | 2.0 | 2.87 | 2.87 | 3.4 | 3.69 | 1.82 | 3.36 |
| iV-ratio (iV(SF)/ iV(CF)) | | 1.13 | 1.57 | 1.56 | 2.19 | 1.85 | 1.05 | 1.79 |
| **DSC** | | | | | | | | |
| crystallisation enthalpy $H_c$ | J/g | 76.4 | 76.8 | 77.4 | 68.9 | 71.7 | 76.3 | 77.4 |
| crystallisation temperature $T_c$ | °C | 128.0 | 128.3 | 128.3 | 127.9 | 128.2 | 127.9 | 128.4 |
| $H_{m,1}$ (PE) | J/g | 21.8 | 22.3 | 22.6 | 0.9 | 23.5 | 0.8 | 19.2 |
| $T_{m,1}$ (PE) | °C | 120.6 | 121.1 | 121.4 | 116.4 | 123.3 | 117.6 | 122.1 |
| $H_{m,2}$ (PP) | J/g | 60.4 | 55.6 | 56.2 | 72.1 | 49.8 | 80.2 | 60.7 |
| $T_{m,2}$ (PP) | °C | 166.1 | 165.7 | 165.8 | 165.7 | 165.8 | 166.2 | 165.6 |
| $H_{m,2}$(PP)/ $H_{m,1}$(PE) | | 2.77 | 2.49 | 2.49 | 80.11 | 2.12 | 100.25 | 3.16 |
| PE in composition (DSC and CRYSTEX) | wt.-% | 11.3 | 12.3 | 12.5 | 0.4 | 13.7 | 0.4 | 10.3 |
| **DMTA** | | | | | | | | |
| $T_g$ (dispersed phase) | °C | -53.1 | -52 | -51.6 | -48.3 | -51.4 | -51.6 | -50.9 |
| $T_g$ (matrix) | °C | 1.4 | 1.5 | 1.9 | -1.1 | 2 | -1 | 1.8 |
| storage modulus G'@23°C | MPa | 357 | 330 | 306 | 305 | 328 | 528 | 328 |
| **Mechanical properties** | | | | | | | | |
| Flexural modulus | MPa | 849 | 818 | 825 | 790 | 703 | 977 | 809 |
| Heat deflection temperature | °C | 72 | 71.4 | 72.6 | 69.9 | 66 | 80.5 | 70.8 |
| Tensile strain at break | % | 572 | 360 | 349 | 282 | 50 | 501 | 28 |
| Tensile modulus | MPa | 886 | 868 | 880 | 824 | 750 | 1037 | 854 |
| Tensile stress at break | MPa | 21.51 | 15.48 | 17.02 | 13.79 | 14.28 | 20.27 | 15.59 |
| Notched impact strength Charpy @23 | $kJ/m^2$ | 45.91 | 26.08 | 16.13 | 68.55 | 14.35 | 38.88 | 11.33 |
| Notched impact strength Charpy @ -20°C | $kJ/m^2$ | 9.34 | 10.48 | 9.61 | 13.8 | 9.73 | 5.21 | 7.17 |
| Puncture energy @+23 °C | J | 9.46 | 9.42 | 9.47 | 9.84 | 9.24 | 11.27 | 9.4 |
| Puncture energy @-20°C | J | 13.22 | 12.87 | 12.28 | 13.05 | 12.1 | 14.37 | 9.95 |
| CLTE +23/80°C | μm/m/°C | 92.02 | 106.29 | | 148.45 | | 108.89 | 133.75 |
| CLTE +23/80°C SD | μm/m/°C | 2.16 | 2.3 | | 2.33 | | 3.86 | 3.25 |
| CLTE -30/80°C | μm/m/°C | 81.75 | 91.94 | | 128.96 | | 93.86 | 114.45 |
| CLTE -30/80°C SD | μm/m/°C | 3.34 | 2.69 | | 1.92 | | 3.2 | 3.04 |

(continued)

| Relationships | | | | | | | | |
|---|---|---|---|---|---|---|---|---|
| C2(CF) * SF * 2 | | 1337 | 1524 | 1483 | 519 | 1664 | 320 | 1367 |
| Tensile strain at break / 100 * Tensile modulus | | 5071 | 3128 | 3070 | 2327 | 373 | 5197 | 239 |
| C2(CF) * SF * 8 | | 5347 | 6094 | 5933 | 2074 | 6655 | 1278 | 5469 |
| -28.5 * C2(SF) + 1850 | | 193.6 | 138.0 | 118.1 | 736.2 | 105.5 | 793.8 | 99.2 |

Inventive example 1 shows a very good balance of mechanical properties (acceptable stiffness, high NIS at room and low temperatures) and a very good (low) CLTE. This is achieved via a heterophasic propylene composition having a C2-rich soluble fraction and a viscosity ratio of the soluble fraction to the crystalline fraction close to unity. If this viscosity ratio is increased, CLTE increases as well (compare IE1 and IE2), but as long as the iV-ratio stays smaller than 1.70, a balanced property profile is achieved.

Further increasing the iV-ratio at high C2(SF) leads to increased CLTE (compare CE4 with IE2). If one keeps the iV-ratio close to unity, but the C2(SF) at a low to medium level (~40%), the CLTE is low, but the low temperature impact performance as well (compare CE3 with IE1). If one wants to increase the low temperature performance of CE3, one can certainly increase the iV-ratio and level of XCS (see CE1), but then the CLTE increases in parallel.

CE3 shows good elongation at break and tensile modulus. However, the low temperature notched impact strength is only moderate. CE2 and CE4 have a C2-rich soluble fraction and a remarkable C2-rich crystalline fraction. However, the molecular weights of the crystalline and the soluble fraction are differing significantly, leading to a iV-ratio of > 1.70 and low elongation (strain) at break at good stiffness and improved low temperature impact compared to CE3.

If the iV ratio is kept smaller than 1.70, the balance of tensile modulus and elongation (strain) at break is improved (IE1 to IE3). The closer the ratio is to 1, the better the performance of the material gets. IE1 shows excellent notched Charpy impact performance at room and low temperatures, reasonable stiffness and excellent elongation (strain) at break.

## Claims

1. A heterophasic polypropylene composition, **characterized in that** the composition has

   - a total content of units derived from ethylene (C2) in the range of 25.0 to 45.0 wt.-%, as determined by FT-IR spectroscopy calibrated by quantitative $^{13}$C-NMR spectroscopy;
   - a soluble fraction (SF) and a crystalline fraction (CF) according to crystallisation extraction analysis (CRYSTEX);
   - a soluble fraction (SF) content determined by crystallisation extraction analysis (CRYSTEX) in the range of from 22.0 wt.-% to 42.0 wt.-%;
   - an ethylene content of said soluble fraction C2(SF), as determined by FT-IR spectroscopy calibrated by quantitative $^{13}$C-NMR spectroscopy, in the range of from 50.0 to 75.0 wt.-%;
   - an intrinsic viscosity of said soluble fraction iV(SF), determined by crystallisation extraction analysis (CRYSTEX), in the range of from 1.8 to 3.5 dl/g; and
   - a ratio (iV(SF)/ iV(CF)) of the intrinsic viscosity of said soluble fraction iV(SF) to the intrinsic viscosity of the crystalline fraction iV(CF) in the range of from 1.00 to 1.70, wherein the intrinsic viscosities are determined by crystallisation extraction analysis (CRYSTEX).

2. The heterophasic polypropylene composition according to claim 1, **characterized in that** the composition has

   - a crystalline fraction (CF) content determined by crystallisation extraction analysis (CRYSTEX) in the range of from 58.0 wt.-% to 78.0 wt.-%; and
   - an ethylene content of said crystalline fraction C2(CF), as determined by FT-IR spectroscopy calibrated by quantitative $^{13}$C-NMR spectroscopy, in the range of from 15.0 to 28.0 wt.-%; and
   - an intrinsic viscosity of said crystalline fraction iV(CF), determined by crystallisation extraction analysis (CRYSTEX), in the range of from 0.8 to 2.5 dl/g.

3. The heterophasic polypropylene composition according to any of the preceding claims, **characterized in that** the composition has a melt flow rate $MFR_2$ (230°C, 2.16 kg, ISO 1133) in the range of from 5 to 25 g/10 min.

4. The heterophasic polypropylene composition according to any of the preceding claims, **characterized in that** the crystalline fraction (CF) has two melting points $T_{m,1}$ and $T_{m,2}$, determined by differential scanning calorimetry (DSC) according to ISO 11357 / part 3 / method C2, wherein the $T_{m,1}$ is in the range of from 115 to 125 °C, and the $T_{m,2}$ is in the range of from 160 to 170 °C.

5. The heterophasic polypropylene composition according to any of the preceding claims, **characterized in that** the crystalline fraction (CF) has two melting enthalpies $H_{m,1}$ and $H_{m,2}$, determined by differential scanning calorimetry (DSC) according to ISO 11357 / part 3 / method C2, wherein the $H_{m,1}$ is in the range of from 15 to 25 J/g, and the $H_{m,2}$ is in the range of from 65 to 95 J/g.

6. The heterophasic polypropylene composition according to any of the preceding claims, **characterized in that** the crystalline fraction (CF) has two melting enthalpies $H_{m,1}$ and $H_{m,2}$, determined by differential scanning calorimetry (DSC) according to ISO 11357 / part 3 / method C2, wherein the ratio $\dfrac{H_{m,2}}{H_{m,1}}$ is in the range of 2.30 to 3.00.

7. The heterophasic polypropylene composition according to any of the preceding claims, **characterized in that** the numerical values of the parameters specified below fulfil the following relationship:

$$C2(CF) * SF * 8 > \frac{Tensile\ strain\ at\ break}{100 * Tensile\ modulus} > C2(CF) * SF * 2$$

wherein

- C2(CF) is the ethylene content of the crystalline fraction in wt.-%;
- SF is the soluble fraction content determined by crystallisation extraction analysis (CRYSTEX) in wt.-%;
- Tensile strain at break in % was measured according to ISO 527-2 (cross head speed = 1 mm/min; test speed 50 5 mm/min at 23 °C) using injection molded specimens 1B prepared as described in EN ISO 1873-2 (dog bone shape, 4 mm thickness); and
- Tensile modulus in MPa was determined according to ISO 527-2 (cross head speed = 1 mm/min; test speed 50 mm/min at 23 °C) using injection molded specimens 1B prepared as described in EN ISO 1873-2 (dog bone shape, 4 mm thickness).

8. The heterophasic polypropylene composition according to any of the preceding claims, **characterized in that** the numerical values of the tensile strain at break in %, measured according to ISO 527-2 (cross head speed = 1 mm/min; test speed 50 5 mm/min at 23 °C) using injection molded specimens 1B prepared as described in EN ISO 1873-2 (dog bone shape, 4 mm thickness), and the ethylene content of the soluble fraction C2(SF) in wt.-% fulfil the following relationship:

$$Tensile\ strain\ at\ break > -28.5 * C2(SF) + 1850.$$

9. The heterophasic polypropylene composition according to any of the preceding claims, **characterized in that** the composition has a tensile strain at break, measured according to ISO 527-2 (cross head speed = 1 mm/min; test speed 50 5 mm/min at 23 °C) using injection molded specimens 1B prepared as described in EN ISO 1873-2 (dog bone shape, 4 mm thickness), of more than 250 %.

10. The heterophasic polypropylene composition according to any of the preceding claims, **characterized in that** the composition has a xylene cold soluble (XCS) fraction, determined according to ISO16152 (first edition; 2005-07-01), in the range of 20 to 40 wt.-%.

11. The heterophasic polypropylene composition according to any of the preceding claims, **characterized in that** the composition comprises

i) a crystalline polypropylene homopolymer (H-PP),
ii) an elastomeric ethylene-propylene copolymer (EPC), and

iii) a crystalline polyethylene (PE)

in a combined amount of more than 90.0 wt.-%, preferably in the range of 95.0 to 99.9 wt.-%, based on the total weight of the heterophasic polypropylene composition;

wherein the elastomeric ethylene-propylene copolymer (EPC) is present in the soluble fraction (SF) determined by crystallisation extraction analysis (CRYSTEX); and

wherein the crystalline polyethylene (PE) and the crystalline polypropylene homopolymer (H-PP) are present in the crystalline fraction (CF), determined by crystallisation extraction analysis (CRYSTEX).

12. The heterophasic polypropylene composition according to claim 11, **characterized in that**

- the crystalline polypropylene homopolymer (H-PP) has a melt flow rate $MFR_2$ (230°C, 2.16 kg, ISO 1133) of 10 to 80 g/10 min, preferably in the range of 15 to 60 g/10 min; and

- the composition comprises the crystalline polypropylene homopolymer (H-PP) in an amount in the range of 35 to 68 wt.-%, based on the total weight of the composition.

13. The heterophasic polypropylene composition according to any of claims 11 or 12, **characterized in that** the composition comprises the crystalline polyethylene (PE) in an amount in the range of 5 to 20 wt.-%, based on the total weight of the composition, when determined by differential scanning calorimetry (DSC) according to ISO 11357 / part 3 /method C2 and crystallisation extraction analysis (CRYSTEX).

14. The heterophasic polypropylene composition according to any one of claims 11 to 13, **characterized in that** the composition is obtainable by polymerizing the polypropylene homopolymer (H-PP), the ethylene-propylene copolymer (EPC) and the polyethylene (PE) in the presence of a Ziegler-Natta catalyst system in a multistage process comprising at least two polymerization reactors connected in series.

15. An article, preferably an automotive article comprising, preferably consisting of the heterophasic polypropylene composition according to any one of claims 1 to 14.

| | Europäisches Patentamt |
| --- | --- |
| | European Patent Office |
| | Office européen des brevets |

**EUROPEAN SEARCH REPORT**

**Application Number**

EP 24 15 9119

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | WO 2017/129721 A1 (BOREALIS AG [AT]) 3 August 2017 (2017-08-03) | 1-10,15 | INV. C08F210/06 |
| A | * claims 1, 2, 3, 5, 8, 11; example IE4; table 2 * | 11-14 | C08L23/12 |
| | ----- | | |
| X | EP 4 101 889 A1 (BOREALIS AG [AT]) 14 December 2022 (2022-12-14) * examples IE4, IE5; table 4+5 * | 1 | |
| | ----- | | |

**TECHNICAL FIELDS SEARCHED (IPC)**

C08F
C08L

The present search report has been drawn up for all claims

| Place of search | Date of completion of the search | Examiner |
| --- | --- | --- |
| Munich | 23 July 2024 | Bernhardt, Max |

EPO FORM 1503 03.82 (P04C01)

## ANNEX TO THE EUROPEAN SEARCH REPORT
## ON EUROPEAN PATENT APPLICATION NO.

EP 24 15 9119

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2024

| Patent document cited in search report | | Publication date | Patent family member(s) | | Publication date |
|---|---|---|---|---|---|
| WO 2017129721 | A1 | 03-08-2017 | BR 112018014299 | A2 | 11-12-2018 |
| | | | CA 3011409 | A1 | 03-08-2017 |
| | | | CN 109071898 | A | 21-12-2018 |
| | | | EP 3408328 | A1 | 05-12-2018 |
| | | | ES 2772748 | T3 | 08-07-2020 |
| | | | RU 2704131 | C1 | 24-10-2019 |
| | | | US 2019031869 | A1 | 31-01-2019 |
| | | | WO 2017129721 | A1 | 03-08-2017 |
| EP 4101889 | A1 | 14-12-2022 | BR 112023025637 | A2 | 27-02-2024 |
| | | | CN 117460774 | A | 26-01-2024 |
| | | | EP 4101889 | A1 | 14-12-2022 |
| | | | ES 2971534 | T3 | 05-06-2024 |
| | | | JP 2024520750 | A | 24-05-2024 |
| | | | KR 20240007718 | A | 16-01-2024 |
| | | | WO 2022258576 | A1 | 15-12-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0887379 A
- WO 9212182 A
- WO 2004000899 A
- WO 2004111095 A
- WO 9924478 A
- WO 9924479 A
- WO 0068315 A
- WO 2016066446 A1
- WO 2023180272 A1
- EP 2960256 B1
- EP 2960279 B1

### Non-patent literature cited in the description

- **HANS ZWEIFEL**. Plastic Additives Handbook. 2001, 871-873
- *CHEMICAL ABSTRACTS*, 128-37-0
- **BUSICO, V** ; **CIPULLO, R**. *Prog. Polym. Sci.*, 2001, vol. 26, 443
- **BUSICO, V.** ; **CIPULLO, R** ; **VACATELLO, M.** ; **SEGRE, A.L**. *Macromolecules*, 1997, vol. 30, 6251
- **ZHOU, Z** ; **KUEMMERLE, R** ; **QIU, X** ; **REDWINE, D** ; **CONG, R.** ; **TAHA, A** ; **BAUGH, D. WINNIFORD, B**. *J. Mag. Reson*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **RESCONI, L.** ; **CAVALLO, L** ; **FAIT, A.** ; **PIEMON-TESI, F**. *Chem. Rev.*, 2000, vol. 100, 1253
- **WANG, W-J** ; **ZHU, S.** *Macromolecules*, 2000, vol. 33, 1157
- **CHENG, H. N**. *Macromolecules*, 1984, vol. 17, 1950
- **SINGH, G.** ; **KOTHARI, A** ; **GUPTA, V**. *Polymer Testing*, 2009, vol. 28 (5), 475
- **KAKUGO, M.** ; **NAITO, Y** ; **MIZUNUMA, K** ; **MIYATAKE, T.** *Macromolecules*, 1982, vol. 15, 1150
- **RANDALL, J**. *Macromol. Sci., Rev. Macromol. Chem. Phys*, 1989, vol. C29, 201
- **RESCONI, L** ; **CAVALLO, L.** ; **FAIT, A.** ; **PIEMON-TESI, F**. *Chem. Rev.*, 2000, vol. 100, 1253
- **LJILJANA JEREMIC** ; **ANDREAS ALBRECHT** ; **MARTINA SANDHOLZER** ; **MARKUS GAHLEIT-NER**. Rapid characterization of high-impact ethylene-propylene copolymer composition by crystallization extraction separation: comparability to standard separation methods. *International Journal of Polymer Analysis and Characterization*, 2020, vol. 25 (8), 581-596